# EUROPEAN PATENT APPLICATION

(11) **EP 3 427 925 A1**
(43) Date of publication of application: **16.01.2019**
(21) Application number: 18172264.6
(22) Date of filing: 15.05.2018
(51) Int. Cl.: B29C 64/386, B33Y 30/00, B33Y 50/00, B29C 64/245

(54) **CALIBRATION METHOD OF THREE-DIMENSIONAL PRINTING APPARATUS**

(30) Priority: 13.07.2017 CN 201710568951
(71) Applicant: XYZprinting, Inc., New Taipei City 22201 (TW); Kinpo Electronics, Inc., New Taipei City 22201 (TW)
(72) Inventor: KAO, Ching-Wei, 22201 New Taipei City (TW)
(74) Representative: Emde, Eric

(57) **Abstract**

A calibration method of a three-dimensional printing apparatus (100) for calibrating a printing platform (110) of the three-dimensional printing apparatus is provided. When a test piece(140) is installed on a mobile holder (120) and a plane medium (201) is placed on the printing platform, the mobile holder is driven to move to a reference calibration point (P1) and move along a vertical axis towards the printing platform so the test piece is abutted against the plane medium. A height position of the test piece abutted against the plane medium is recorded. The mobile holder is driven to move to a second calibration point (P2) and move to the height position, and a height of a second corner of the printing platform is adjusted. The mobile holder is driven to move to a second calibration point (P2) and move to the height position, and a height of a second corner of the printing platform is adjusted.

## Description

### Technical Field

The disclosure relates to a three-dimensional printing technology, and more particularly, relates to a calibration method of a three-dimensional printing apparatus.

### BACKGROUND

With advances in computer-aided manufacturing (CAM), the manufacturing industries have developed a three-dimensional printing technology capable of rapidly fabricating products from an original design concept. The three-dimensional printing technology is in fact a collective term for a series of rapid prototyping (RP) techniques with the basic principle of laminate manufacturing, where a rapid prototyping machine forms cross-sectional shapes of a workpiece in the X-Y plane by ways of scanning, shift intermittently at a layer thickness in the Z coordinates so a 3D object can be eventually formed.

The quality of the three-dimensional printing apparatus is confirmed by professionals during production with use of equipments (leveling instrument, a thickness ruler, etc.) for measuring and adjusting mechanical parts. A flatness of a printing platform is the basic key for forming a three-dimensional object. If the printing platform is skewed, issues that lead to skewed deformation or stacking difficulty of the finished product will arise.

Yet, after the three-dimensional printing apparatus is sold, the consumer may have to re-calibrate the printing platform skewed due to conditions like excessive use, handling, troubleshooting, and self-adjustment. In this case, because the consumer is not the professional and has no professional equipment, it is difficult for the consumer to self-adjust the printing platform. Therefore, the manufacturer needs to assign specialist for the maintenance or ask the consumer to send the printing apparatus back to the factory. As a result, a lot of manpower and transportation costs will be produced.

### SUMMARY

The disclosure is directed to a calibration method of a three-dimensional printing apparatus, which is a calibration method for allowing the user to self-operate with simple tools so as to reduce the manpower required in maintenance.

The calibration method of the three-dimensional printing apparatus of the disclosure is used for calibrating a printing platform of the three-dimensional printing apparatus. The calibration method includes: when a test piece is installed on a mobile holder and a plane medium is placed on the printing platform, driving the mobile holder to move to a reference calibration point and move along a vertical axis towards the printing platform so the test piece is abutted against the plane medium, wherein the reference calibration point is adjacent to a first side of the printing platform; recording a height position of the test piece when being abutted against the plane medium on the reference calibration point; driving the mobile holder to move to a first calibration point and move along the vertical axis to the height position, and adjusting a height of a first corner of the printing platform by a first height adjusting mechanism so the test piece is abutted against the plane medium; and driving the mobile holder to move to a second calibration point and move along the vertical axis to the height position, and adjusting a height of a second corner of the printing platform by a second height adjusting mechanism so the test piece is abutted against the plane medium, wherein the first calibration point and the second calibration point are adjacent to a second side opposite to the first side of the printing platform where the reference calibration point is located.

In an example embodiment, the calibration method further includes: displaying a guide interface on a display unit, and displaying a calibration option in the guide interface; after the calibration option is enabled, displaying an installation message of the test piece and an installation-completed option in the guide interface; after the installation-completed option is enabled, displaying a setup message of the plane medium and a setup-completed option in the guide interface; and when the setup-completed option is enabled, displaying a reference point testing message in the guide interface, and driving the mobile holder to move to the reference calibration point and move along the vertical axis towards the printing platform.

In an example embodiment, in step of driving the mobile holder to move to the reference calibration point and move along the vertical axis towards the printing platform, driving the mobile holder to move towards the printing platform includes: driving the mobile holder to a predetermined position first, wherein the predetermined position is spaced apart from the printing platform by a distance; after the mobile holder is moved on the reference calibration point to the predetermined position, displaying a guide interface on a display unit, and displaying an up/down adjustment option in the guide interface; and generating a fine-tune signal by triggering the up/down adjustment option, and controlling the mobile holder to go up or down along the vertical axis according to the fine-tune signal until the test piece is abutted against the plane medium.

In an example embodiment, the calibration method further includes: after the mobile holder is moved to the predetermined position, displaying a first confirmation option in the guide interface; after the test piece located on the reference calibration point is abutted against the plane medium and the first confirmation option being enabled is detected, driving the mobile holder to move to the first calibration point and move along the vertical axis to the height position; and after the mobile holder is moved on the first calibration point to the height position, displaying a first fine-tune platform message in the guide interface, and adjusting the height of the first corner of the printing platform by the first height adjusting mechanism until the test piece is abutted against the plane medium.

In an example embodiment, after the mobile holder is moved on the first calibration point to the height position, the calibration method further includes: displaying a second confirmation option in the guide interface; after the second confirmation option is enabled, driving the mobile holder to move to the second calibration point and move along the vertical axis to the height position; and after the mobile holder is moved on the second calibration point to the height position, displaying a second fine-tune platform message in the guide interface, and adjusting the height of the second corner of the printing platform by the second height adjusting mechanism until the test piece is abutted against the plane medium.

In an example embodiment, after the mobile holder is moved on the second calibration point to the height position, the calibration method further includes: displaying a done option in the guide interface; and after the done option being triggered is detected, driving the mobile holder back to an initial position.

In an example embodiment, two said reference calibration points are disposed on the first side of the printing platform. The calibration method further includes: displaying a guide interface on a display unit, displaying an adjusting printing platform message in the guide interface, and adjusting a height of the first side by a third height adjusting mechanism located on the first side of the printing platform so the two said reference calibration points on the first side have the same height position.

In an example embodiment, the first height adjusting mechanism is a knob corresponding to the first calibration point, and the second height adjusting mechanism is a knob corresponding to the second calibration point.

In an example embodiment, the test piece is a feeding tube, and the plane medium is a paper.

In an example embodiment, the plane medium is secured onto the printing platform by an applied force of the abutted test piece.

Based on the above, the user can self-calibrate the printing platform by using the test piece and the plane medium thereby reducing the manpower required in maintenance, and thus the time waited for professionals to come or the time spent for sending the machine back to the factory may be saved.

To make the above features and advantages of the disclosure more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of a three-dimensional printing apparatus according to an embodiment of the disclosure.
FIG. 2 is a top view of a printing platform according to an embodiment of the disclosure.
FIG. 3 is a flowchart of a calibration method of a three-dimensional printing apparatus according to an embodiment of the disclosure.
FIG. 4A to FIG. 4L are schematic diagrams of a guide interface according to an embodiment of the disclosure.
FIG. 5 is a top view of a printing platform according to another embodiment of the disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

It is to be understood that, the foregoing and other detailed descriptions, features, and advantages are intended to be described more comprehensively by providing embodiments accompanied with figures hereinafter. In the following embodiments, wordings used to indicate directions, such as "up," "down," "front," "back," "left," and "right", merely refer to directions in the accompanying drawings. Therefore, the directional wording is used to illustrate rather than limit the disclosure. Further, in each of following embodiments, the same or similar reference numbers represent the same or similar elements.

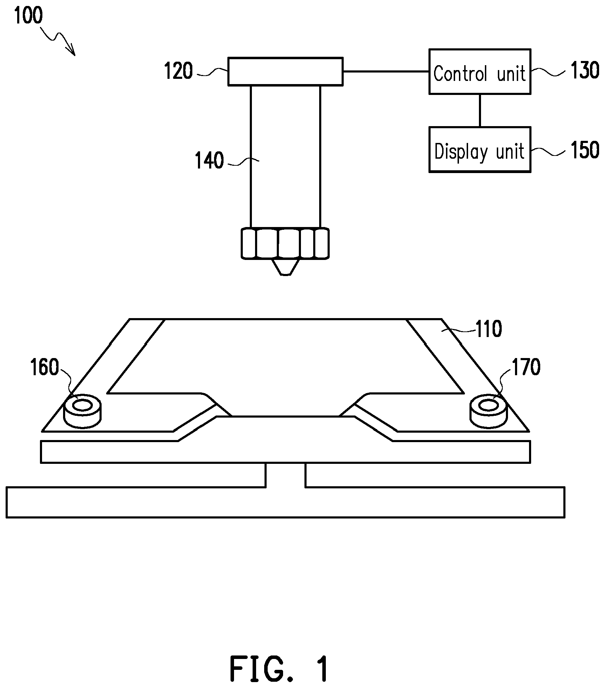

FIG. 1 is a schematic diagram of a three-dimensional printing apparatus according to an embodiment of the disclosure. In the present embodiment, only partial members of a three-dimensional printing apparatus 100 are illustrated. With reference to FIG. 1, the three-dimensional printing apparatus 100 includes a printing platform 110, a mobile holder 120, a control unit 130, a feeding tube 140, a displaying unit 150, a first height adjusting mechanism 160 and a second height adjusting mechanism 170.

The mobile holder 120 is disposed above the printing platform 110. The feeding tube 140 is installed on the mobile holder 120. In the present embodiment, the first height adjusting mechanism 160 and the second height adjusting mechanism 170 are provided on one side of the printing platform 110. The first height adjusting mechanism 160 and the second height adjusting mechanism 170 are, for example, knobs for adjusting a height of the printing platform 110.

The control unit 130 is, for example, a central processing unit (CPU) or other programmable devices for general purpose or special purpose such as a microprocessor, a digital signal processor (DSP), a programmable controller, an application specific integrated circuit (ASIC), a programmable logic device (PLD) or other similar devices or a combination of above-mentioned devices, but the disclosure is not limited thereto. The control unit 130 is coupled to the mobile holder 120, and configured to control the mobile holder 120 to move in three-dimensional space, and control materials to be stacked layer by layer on the printing platform 110 via the feeding tube 140, so as to form into a desired shape.

In the present embodiment, the three-dimensional printing apparatus 100 further includes a display unit 150. The display unit 150 is coupled to the control unit 130. The display unit 150 is, for example, a touch screen, and the user can give instructions by touching the display unit 150. In other embodiments, the display unit 150 may also be a screen without a touch module, and the instructions are given through an input unit instead, such as a mouse, a keyboard, a drawing board, etc. The control unit 130 may further detect whether the feeding tube 140 is installed on the mobile holder 120, and display a corresponding icon, indicating whether the feeding tube 140 is installed, in the display unit 150.

The calibration method of the present embodiment utilizes a test piece and a plane medium as tools for calibration. For example, the feeding tube 140 or the like may serve as the test piece, and a paper may serve as the plane medium. Nonetheless, the above description is merely an example, other members that can be installed on the mobile holder 120 may also serve as the test piece, and other objects that can be fatly placed on the printing platform 110 (e.g., a thin plastic sheet) may also serve as the plane medium in other embodiments.

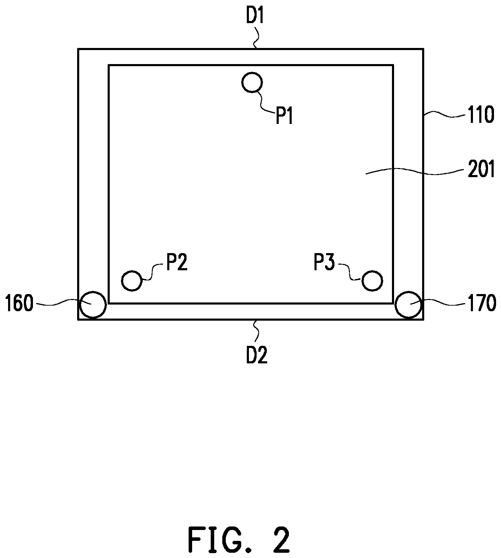

FIG. 2 is a top view of a printing platform according to an embodiment of the disclosure. In the present embodiment, a paper 201 serves as the plane medium. The paper 201 is placed on the printing platform 110, and the feeding tube 140 installed on mobile holder 120 is used to abut against the paper 201 so the paper 201 is secured onto the printing platform 110 by an applied force of the abutted feeding tube 140. At this time, if the user manually pulls the paper 201, the paper 201 will not be pulled away from the printing platform 110. The printing platform 110 may be calibrated by utilizing the above means on one reference calibration point P1 and two calibration points (a first calibration point P2 and a second calibration point P3). However, in other embodiments, the printing platform 110 may also be calibrated by utilizing the above means on two reference calibration points and two calibration points.

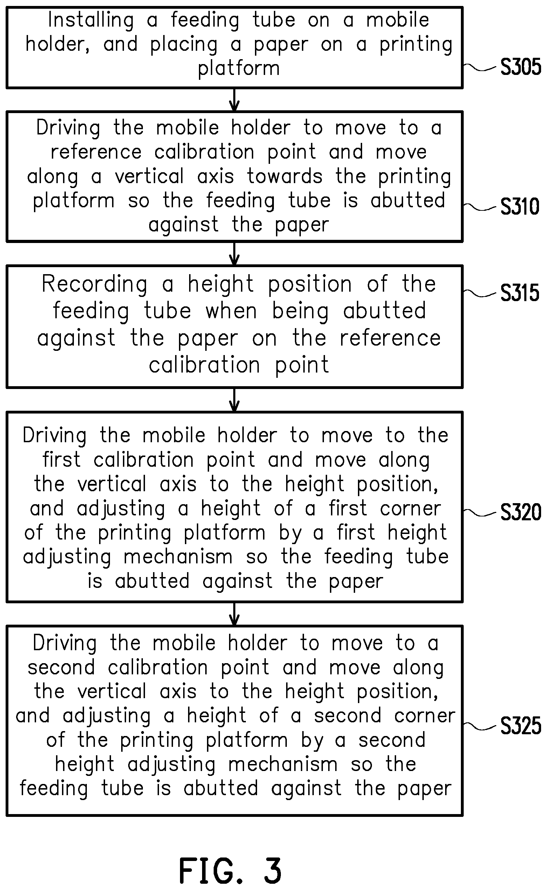

The calibration method of the three-dimensional printing apparatus 100 will be described below with reference to FIG. 1 and FIG. 2. FIG. 3 is a flowchart of a calibration method of a three-dimensional printing apparatus according to an embodiment of the disclosure. Referring to FIG. 1 to FIG. 3 together, in the present embodiment, the reference calibration point P1, the first calibration point P2 and the second calibration point P3 are disposed for calibration procedures. The reference calibration point P1 is located on a first side D1 of the printing platform 110. The first calibration point P2 and the second calibration point P3 are located on a second side D2 opposite to the first side D1 of the printing platform 110 where the reference calibration point P1 is located. For example, the first calibration point P2 and the second calibration point P3 are disposed at two corners (a first corner and a second corner) of the second side D2, respectively.

In the present embodiment, the first height adjusting mechanism 160 and the second height adjusting mechanism 170 are disposed on the second side D2 of the printing platform 110. The first height adjusting mechanism 160 is, for example, a knob corresponding to the first calibration point P2, and the second height adjusting mechanism 170 is, for example, a knob corresponding to the second calibration point P3.

In step S305, the feeding tube 140 is installed on the mobile holder 120, and the paper 201 is placed on the printing platform 110. When the control unit 130 determines that the feeding tube 140 has been installed on the mobile holder 120 and the paper 201 has been placed on the printing platform 110, in step S310, the mobile holder 120 is driven by the control unit 130 to move to the reference calibration point P1 and move along a vertical axis towards the printing platform 110 so the feeding tube 140 is abutted against the paper 201. At this time, the paper 201 is secured onto the printing platform 110 by the applied force of the abutted feeding tube 140, and the paper 201 will not be pulled away from the printing platform 110 when the user manually pulls the paper 201.

Next, in step S315, the control unit 130 records a height position of the feeding tube 140 when being abutted against the paper 201 on the reference calibration point P1. For example, the three-dimensional printing apparatus 100 further includes a storage device so the control unit 130 can store the height position to the storage device as a reference datum in the subsequent calibration.

Then, in step 320, the mobile holder 120 is driven by the control unit 130 to move to the first calibration point P2 and move along the vertical axis to the height position recorded by the storage device, and a height of the first corner of the printing platform 110 is adjusted by the first height adjusting mechanism 160 so the feeding tube 140 is abutted against the paper 201. At this time, the paper 201 is secured onto the printing platform 110 by the applied force of the abutted feeding tube 140, and the paper 201 will not be pulled away from the printing platform 110 when the user manually pulls the paper 201.

Next, in step 325, the mobile holder 120 is driven by the control unit 130 to move to the second calibration point P3 and move along the vertical axis to the height position, and a height of the second corner of the printing platform is adjusted by the second height adjusting mechanism 170 so the feeding tube 140 is abutted against the paper 201. At this time, the paper 201 is secured onto the printing platform 110 by the applied force of the abutted feeding tube 140, and the paper 201 will not be pulled away from the printing platform 110 when the user manually pulls the paper 201.

When the feeding tube 140 is abutted against the paper 201, the three-dimensional printing apparatus 100 will guide the user to pull the paper 201 and inspect a space between a bottom portion (e.g., a nozzle) of the feeding tube 140 and the paper. For example, in step S310, the user gives an instruction to the control unit 130 through a touch module of the display unit 150, so the control unit 130 can drive the mobile holder 120 to adjust its position on the Z-axis until the paper 201 cannot be pulled out. In step S320 and step S325, the user can adjust the height of the printing platform 110 by utilizing the first height adjusting mechanism 160 and the second height adjusting mechanism 170, respectively, until the paper 201 cannot be pulled out.

In addition, for allowing the user to be more aware of the calibration process, the three-dimensional printing apparatus 100 can display a guide interface in the display unit 150 so the user can be guided by the guide interface for calibrating the printing platform 110 of the three-dimensional printing apparatus 100.

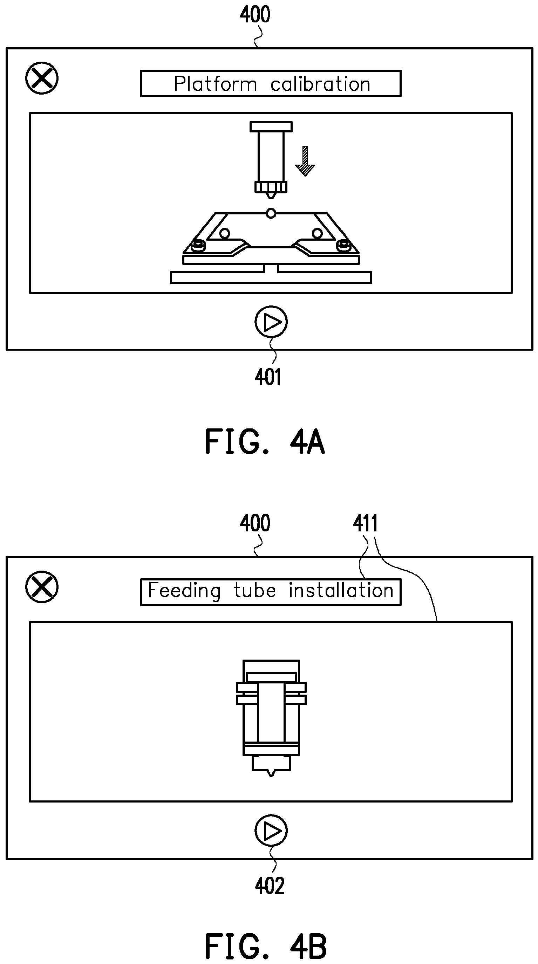

FIG. 4A to FIG. 4L are schematic diagrams of a guide interface according to an embodiment of the disclosure. In FIG. 4A, a calibration option 401 is displayed in a guide interface 400. After the calibration option 401 is enabled, as shown in FIG. 4B, an installation message 411 of the feeding tube 140 and an installation-completed option 402 are displayed in the guide interface 400 by the control unit 130. Here, the installation message 411 includes a text message "Feeding tube installation" and a corresponding icon. According to the text message and the icon of the guide interface 400, the user may then conduct the corresponding action by following the guide. After the installation of the feeding tube 140 is completed, with use of the display unit 150 (e.g., the touch screen), the user may directly touch the installation-completed option 402 on the display unit 150 so as to enable the installation-completed option 402.

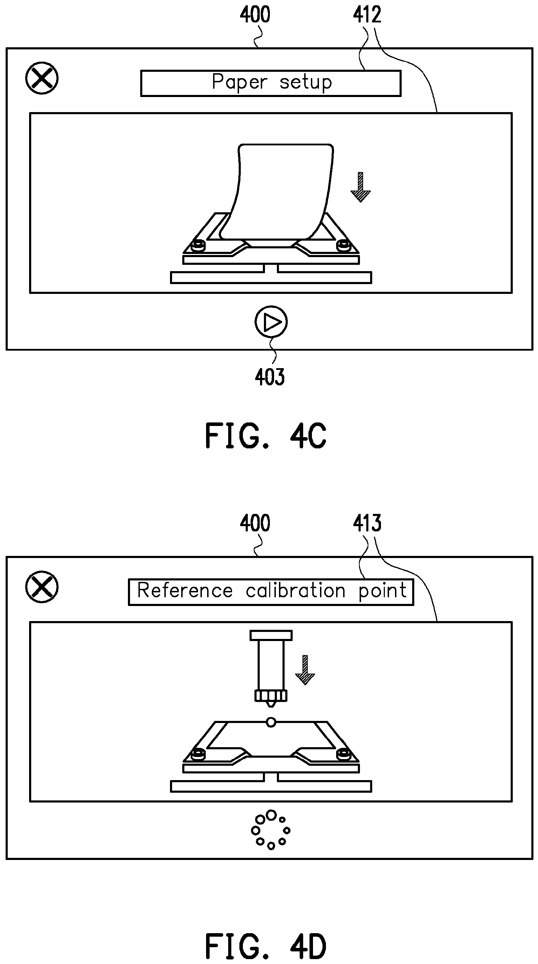

After the installation-completed option 402 is enabled, as shown in FIG. 4C, a setup message 412 of the paper 201 and a setup-completed option 403 are displayed in the guide interface 400 by the control unit 130. Here, the setup message 412 includes a text message "Paper setup" and a corresponding icon, so the user may conduct the corresponding action by following the guide. After the setup of the paper 201 is completed, with use of the display unit 150 (e.g., the touch screen), the user may directly touch the setup-completed option 403 on the display unit 150 so as to enable the setup-completed option 403.

After the setup-completed option 403 is enabled, as shown in FIG. 4D, a reference point testing message 413 is displayed in the guide interface 400 by the control unit 130, and the mobile holder 120 is driven by the control unit 130 to move to the reference calibration point P1 and move along the vertical axis towards the printing platform 110. Here, the reference point testing message 413 includes a text message "Reference calibration point" and a corresponding icon.

Specifically, after the setup-completed option 403 is enabled, the control unit 130 receives a corresponding enable signal, so then the control unit 130 can drive the mobile holder 120 based on the enable signal to move along the horizontal plane above the reference calibration point P1 and move along the vertical axis towards the printing platform 110 to a predetermined position. In the present embodiment, to prevent the feeding tube 140 from directly impacting the printing platform 110 due to the mobile holder 120 went too much down, the predetermined position for the mobile holder 120 to go down is spaced apart from the printing platform 110 by a distance so the feeding tube 140 will not be directly abutted against the paper 201 after going down.

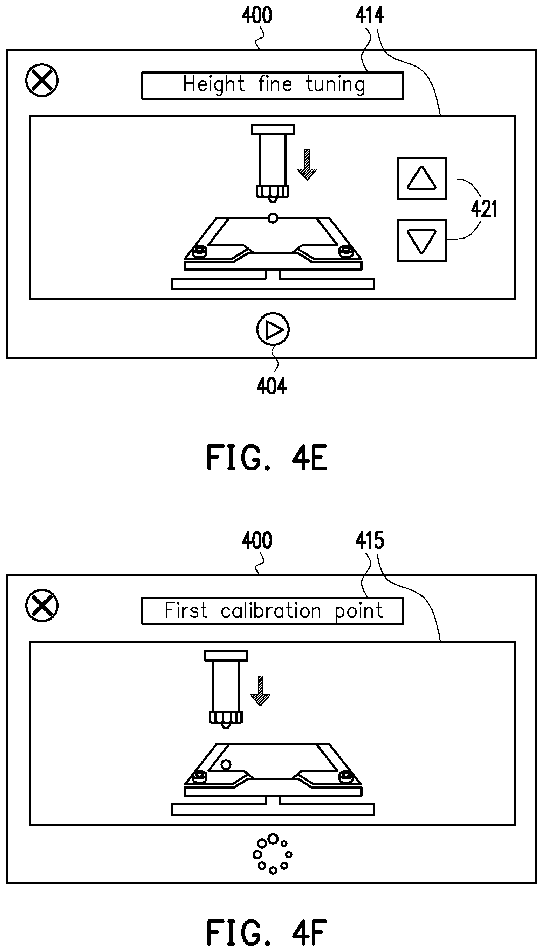

After the mobile holder 120 is moved on the reference calibration point P1 to the predetermined position, as shown in FIG. 4E, a first fine-tune feeding tube message 414 is displayed in the guide interface 400 by the control unit 130, and an up/down adjustment option 421 and a first confirmation option 404 are displayed in the guide interface 400 by the control unit 130. A fine-tune signal is generated by triggering the up/down adjustment option 421, so the control unit 130 can control the mobile holder 120 based on the fine-tune signal to go up or down along the vertical axis until the feeding tube 140 is abutted against the paper 201. For example, by directly touching an up button or a down button of the up/down adjustment option 421 on the display unit 150 so the control unit 130 correspondingly sends an up signal or a down signal to the mobile holder 120, the mobile holder 120 can be controlled to go up or down. After trying to pull out the paper 201 and confirming that the feeding tube 140 is abutted against the paper 201, the user can directly touch the first confirmation option 404 so as to enable the first confirmation option 404.

After the feeding tube 140 located on the reference calibration point P1 is abutted against the paper 201 and the first confirmation option 404 being enabled is detected, as shown in FIG. 4F, a first calibration point message 415 is displayed in the guide interface 400 by the control unit 130, and the mobile holder 120 is driven by the control unit 130 to move to the first calibration point P2 and move along the vertical axis to the recorded height position. Here, the first calibration point message 415 includes a text message "First calibration point" and a corresponding icon.

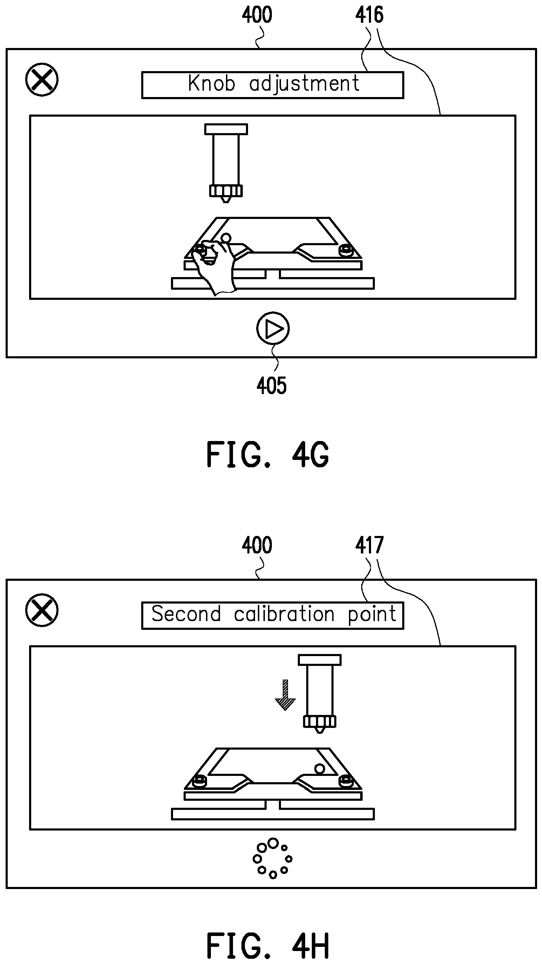

After the mobile holder 120 is moved on the first calibration point P2 to the recorded height position, as shown in FIG. 4G, a first fine-tune platform message 416 is displayed in the guide interface 400 by the control unit 130, and the height of the first corner of the printing platform 110 is adjusted by the first height adjusting mechanism 160 until the feeding tube 140 is abutted against the paper 201. Then, a second confirmation option 405 is displayed in the guide interface 400 by the control unit 130. Here, the first fine-tune platform message 416 includes a text message "Knob adjustment" and a corresponding icon. For example, the user can adjust the height of the first corner of the printing platform 110 by the first height adjusting mechanism 160 with the guidance of the first fine-tune platform message 416. After the adjustment is completed, the user can directly touch the second confirmation option 405 so as to enable the second confirmation option 405.

After the second confirmation option 405 is enabled, as shown in FIG. 4H, a second calibration point message 417 is displayed in the guide interface 400 by the control unit 130, and the mobile holder 120 is driven by the control unit 130 to move to the second calibration point P3 and move along the vertical axis to the recorded height position. Here, the second calibration point message 417 includes a text message "Second calibration point" and a corresponding icon.

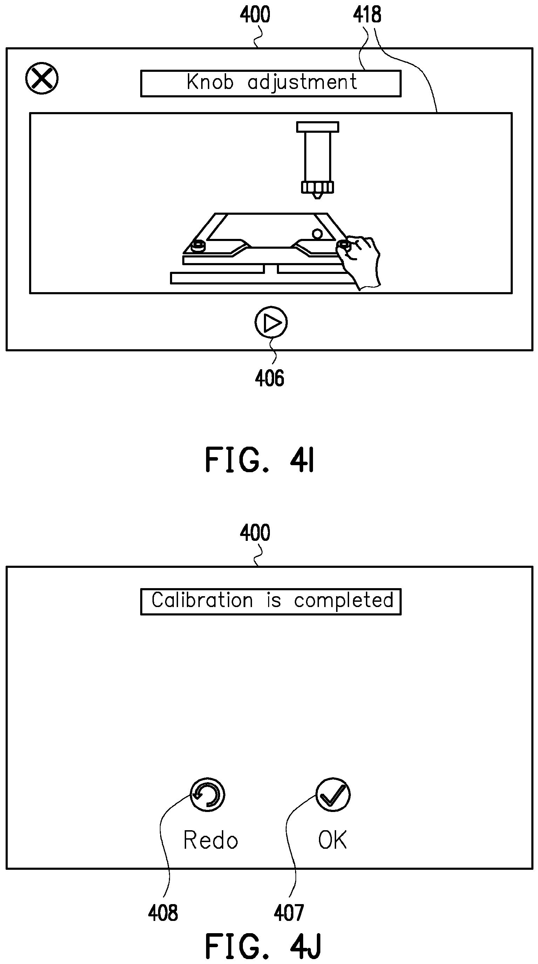

After the mobile holder 120 is moved on the second calibration point P3 to the height position, as shown in FIG. 4I, a second fine-tune platform message 418 is displayed in the guide interface 400 by the control unit 130, and the height of the second corner of the printing platform 110 is adjusted by the second height adjusting mechanism 170 until the feeding tube 140 is abutted against the paper 201. Then, a third confirmation option 406 is displayed in the guide interface 400 by the control unit 130. Here, the second fine-tune platform message 418 includes a text message "Knob adjustment" and a corresponding icon. For example, the user can adjust the height of the second corner of the printing platform 110 by the second height adjusting mechanism 170 with the guidance of the second fine-tune platform message 418. After the adjustment is completed, the user can directly touch the third confirmation option 406 so as to enable the third confirmation option 406.

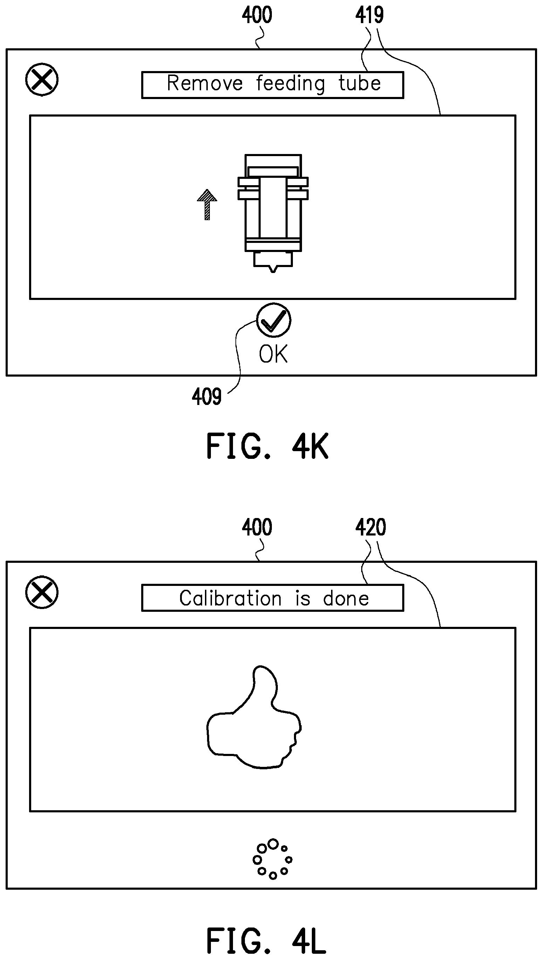

After the third confirmation option 406 is enabled, as shown in FIG. 4J, a done option 407 and a re-execute option 408 are displayed in the guide interface 400 by the control unit 130. When the re-execute option 408 being triggered is detected, the display unit 150 displays the screen as shown by FIG. 4A, which then guides the user to conduct the procedures of FIG. 4A to FIG. 4J again as described in FIG. 4A to FIG. 4J above. When the done option 407 being triggered is detected, the mobile holder 120 is driven by the control unit 130 to go back to an initial position, and then, as shown in FIG. 4K, a remove feeding tube message 419 and a removal-completed option 409 are displayed in the guide interface 400 by the control unit 130. When the removal-completed option 409 being triggered is detected, as shown in FIG. 4L, a calibration-done message 420 is displayed in the guide interface 400 by the control unit 130.

Furthermore, in the present embodiment, to prevent the feeding tube 140 from impacting the printing platform 110 while the mobile holder 120 is going down on the first calibration point P2 and the second calibration point P3, the guide interface 400 can prompt the user to lower the height of the printing platform 110 by the first height adjusting mechanism160 and the second height adjusting mechanism 170 before the calibration.

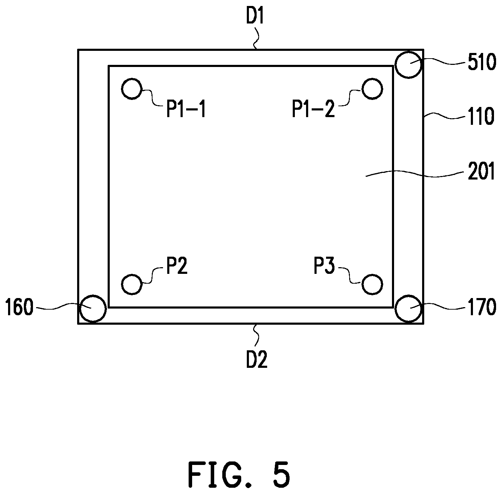

In other embodiment, two reference calibration points may also be disposed on the first side D1 to calibrate the printing platform 110 in cooperation with two calibration points on the second side D2. FIG. 5 is a top view of a printing platform according to another embodiment of the disclosure. Two reference calibration points P1-1 and P1-2 are disposed on the first side D1 of the printing platform 110. Here, the control unit 130 displays the guide interface on the display unit and displays an adjusting printing platform message in the guide interface, which notifies the user to adjust a height of the first side D1 of the printing platform 110 by a third height adjusting mechanism 510 on the first side D1 so the two reference calibration points P1-1 and Pl-2 on the first side D1 have the same height position. Such height position is used as a reference datum for the first calibration point P2 and the second calibration point P3 on the second side D2. The third height adjusting mechanism 510 is, for example, a knob.

For example, the control unit 130 can drive the mobile holder 120 to move to the reference calibration point P1-1 and move along the vertical axis towards the printing platform 110 so the feeding tube 140 is abutted against the paper 201. The control unit 130 then records the height position. Next, as shown by step S320 or step S325 above, the height of the corner where the reference calibration point PI-2 is located is adjusted by the third height adjusting mechanism 510 so the two reference calibration points P1-1 and P1-2 on the first side D1 have the same height position. By doing so, such height position can be used as the reference datum for the first calibration point P2 and the second calibration point P3 on the second side D2 (as shown by step S320 and S325).

Furthermore, in other embodiments, one reference calibration point and three calibration points may also be disposed on four corners of the printing platform, respectively, and a corresponding height adjusting mechanism is disposed on each of the corners corresponding to the three calibration points. After the height position of the feeding tube 140 when being abutted against the paper 201 on the reference calibration point is recorded (as shown by steps S305 to S315), the printing platform 110 is adjusted by the corresponding height adjusting mechanisms respectively on the three calibration points (as shown by steps S320 and S325).

In summary, according to the disclosure, the test piece and the plane medium are used as the tools for self calibrating the printing platform, such that the user can conduct operations (e.g., tool placement or removal, and knob adjustment) according to the guide interface of the display unit so the mobile holder will automatically move the feeding tube to a designated measuring position. In this way, the user can self-operate this calibration method with simple tools, and thus the time waited for professionals to come or the time spent for sending the machine back to the factory may be saved. Moreover, as for the manufacturer, the manpower required in maintenance may also be reduced.

### [REFERENCE SIGNS LIST]

100: three-dimensional printing apparatus
110: printing platform
120: mobile holder
130: control unit
140: feeding tube
150: displaying unit
160: first height adjusting mechanism
170: second height adjusting mechanism
201: paper
400: guide interface
401: calibration option
402: installation-completed option
403: setup-completed option
404: first confirmation option
405: second confirmation option
406: third confirmation option
407: done option
408: re-execute option
409: removal-completed option
411: installation message
412: setup message
413: reference point testing message
414: first fine-tune feeding tube message
415: first calibration point message
416: first fine-tune platform message
417: second calibration point message
418: second fine-tune platform message
419: remove feeding tube message
420: calibration-done message
421: up/down adjustment option
510: third height adjusting mechanism
D1: first side
D2: second side
P1, P1-1, P1-2: reference calibration point
P2: first calibration point
P3: second calibration point
S305-S325: steps

## Claims

1. A calibration method of a three-dimensional printing apparatus for calibrating a printing platform (110) of the three-dimensional printing apparatus (100), the calibration method comprising:
when a test piece is installed on a mobile holder (120) and a plane medium is placed on the printing platform (110), driving (S310) the mobile holder (120) to move to a reference calibration point (P1) and move along a vertical axis towards the printing platform (110) so the test piece is abutted against the plane medium, wherein the reference calibration point (P1) is adjacent to a first side (D1) of the printing platform (110);
recording (S315) a height position of the test piece when being abutted against the plane medium on the reference calibration point (P1);
driving (S320) the mobile holder (120) to move to a first calibration point (P2) and move along the vertical axis to the height position, and adjusting a height of a first corner of the printing platform (110) by a first height adjusting mechanism (160) so the test piece is abutted against the plane medium; and
driving (S325) the mobile holder (120) to move to a second calibration point (P3) and move along the vertical axis to the height position, and adjusting a height of a second corner of the printing platform (110) by a second height adjusting mechanism (170) so the test piece is abutted against the plane medium, wherein the first calibration point (P2) and the second calibration point (P3) are adjacent to a second side (D2) opposite to the first side (D1) of the printing platform (110) where the reference calibration point (P1) is located.

2. The calibration method of the three-dimensional printing apparatus of claim 1, further comprising:
displaying a guide interface (400) on a display unit, and displaying a calibration option (401) in the guide interface (400);
after the calibration option (401) is enabled, displaying an installation message (411) of the test piece and an installation-completed option (402) in the guide interface (400);
after the installation-completed option (402) is enabled, displaying a setup message (412) of the plane medium and a setup-completed option (403) in the guide interface (400); and
when the setup-completed option (403) is enabled, displaying a reference point testing message (413) in the guide interface (400), and driving the mobile holder (120) to move to the reference calibration point (P1) and move along the vertical axis towards the printing platform (110).

3. The calibration method of the three-dimensional printing apparatus of claim 1 or claim 2, wherein in the step of driving the mobile holder (120) to move to the reference calibration point (P1) and move along the vertical axis towards the printing platform (110), driving the mobile holder (120) to move towards the printing platform (110) comprises:
driving the mobile holder (120) to a predetermined position first, wherein the predetermined position is spaced apart from the printing platform (110) by a distance;
after the mobile holder (120) is moved on the reference calibration point (P1) to the predetermined position, displaying a guide interface (400) on a display unit, and displaying an up/down adjustment option (421) in the guide interface (400); and
generating a fine-tune signal by triggering the up/down adjustment option (421), and controlling the mobile holder (120) to go up or down along the vertical axis according to the fine-tune signal until the test piece is abutted against the plane medium.

4. The calibration method of the three-dimensional printing apparatus of claim 3, further comprising:
after the mobile holder (120) is moved to the predetermined position, displaying a first confirmation option (404) in the guide interface (400);
after the test piece located on the reference calibration point (P1) is abutted against the plane medium and the first confirmation option (404) being enabled is detected, driving the mobile holder (120) to move to the first calibration point (P2) and move along the vertical axis to the height position; and
after the mobile holder (120) is moved on the first calibration point (P2) to the height position, displaying a first fine-tune platform message (416) in the guide interface (400), and adjusting the height of the first corner of the printing platform (110) by the first height adjusting mechanism (160) until the test piece is abutted against the plane medium.

5. The calibration method of the three-dimensional printing apparatus of claim 4, wherein after the mobile holder (120) is moved on the first calibration point (P2) to the height position, the calibration method further comprises:
displaying a second confirmation option (405) in the guide interface (400);
after the second confirmation option (405) is enabled, driving the mobile holder (120) to move to the second calibration point (P3) and move along the vertical axis to the height position; and
after the mobile holder (120) is moved on the second calibration point (P3) to the height position, displaying a second fine-tune platform message (418) in the guide interface (400), and adjusting the height of the second corner of the printing platform (110) by the second height adjusting mechanism (170) until the test piece is abutted against the plane medium.

6. The calibration method of the three-dimensional printing apparatus of claim 5, wherein after the mobile holder (120) is moved on the second calibration point (P3) to the height position, the calibration method further comprises:
displaying a done option (407) in the guide interface (400); and
after the done option (407) being triggered is detected, driving the mobile holder (120) back to an initial position.

7. The calibration method of the three-dimensional printing apparatus of any one of claims 1 to 6, wherein two said reference calibration points (P1-1, P1-2) are disposed on the first side (D1) of the printing platform (110), and the calibration method further comprises:
displaying a guide interface (400) on a display unit, displaying an adjusting printing platform (110) message in the guide interface (400), and adjusting a height of the first side (D1) by a third height adjusting mechanism (510) located on the first side (D1) of the printing platform (110) so the two said reference calibration points (P1-1, P1-2) on the first side (D1) have the same height position.

8. The calibration method of the three-dimensional printing apparatus of any one of claims 1 to 7, wherein the first height adjusting mechanism (160) is a knob corresponding to the first calibration point (P2), and the second height adjusting mechanism (170) is a knob corresponding to the second calibration point (P3).

9. The calibration method of the three-dimensional printing apparatus of any one of claims 1 to 8, wherein the test piece is a feeding tube (140), and the plane medium is a paper (201).

10. The calibration method of the three-dimensional printing apparatus of any one of claims 1 to 9, wherein the plane medium is secured onto the printing platform (110) by an applied force of the abutted test piece.
